# EUROPEAN PATENT APPLICATION

(11) **EP 1 975 002 A2**
(43) Date of publication of application: **01.10.2008**
(21) Application number: 08153291.3
(22) Date of filing: 26.03.2008
(51) Int. Cl.: B60R 3/02

(54) **Step apparatus for vehicle and structure arrangement of step apparatus for vehicle**

(30) Priority: 27.03.2007 JP 2007081273; 27.03.2007 JP 2007081274
(71) Applicant: AISIN SEIKI KABUSHIKI KAISHA, Kariya-shi, Aichi-ken 448-8650 (JP)
(72) Inventor: Okada, Hiroki, Kariya-shi Aichi 448-8650 (JP); Fukumoto, Ryoichi, Kariya-shi Aichi 448-8650 (JP); Suzuki, Seiichi, Nishikamo-gun Aichi (JP)
(74) Representative: TBK-Patent

(57) **Abstract**

A step apparatus (10) for a vehicle is provided at an entrance (1a) of a vehicle body (1) opened and closed by a slide door (2) slidably supported to the vehicle body (1) via a door arm (16) in a longitudinal direction of the vehicle. The step apparatus (10) includes a main body (11) provided at a lower position than a vehicle floor (3), a drive mechanism (20) provided in the main body (11), and a step (14) provided in the main body (11) to be movable between a protruded position and a retracted position relative to the main body (11) in association with an opening movement and a closing movement of the slide door (2). The drive mechanism (20) includes a drive portion (13) driving the step (14) to move to the protruded position relative to the main body (11) in a width direction of the vehicle with an inclination towards a backward side of the vehicle in association with the opening movement of the slide door (2).

## Description

### FIELD OF THE INVENTION

The present invention generally relates to a step apparatus for a vehicle and a structure arrangement of the same for achieving an easy ingress and egress of a passenger of the vehicle.

### BACKGROUND

A step apparatus for a vehicle allowing an easy ingress and egress of a passenger to and from the vehicle (for example, an automobile) is proposed in each of JP2003-127776A (hereinafter, referred to as reference 1) and JP2007-22142A (hereinafter, referred to as reference 2), for example.

The step apparatus for the vehicle disclosed in the references 1 and 2 includes a main body and a step. The main body of the step apparatus is arranged to be lower than a height of a vehicle floor so that one step of a passenger can be closer to the ground. The step is moved between a protruded position and a retracted position relative to the main body. Further, the main body includes a drive mechanism, which is configured, for example, by a driving force transmitting mechanism and an actuator, for allowing the step to move. The step is moved to the protruded position from a main frame by the drive mechanism when a vehicle door is in an opened state. On the other hand, the step is moved to the retracted position in the main frame by the drive mechanism when the vehicle door is in a closed state. Accordingly, when not being required, the step may be retracted, or accommodated, in the main body of the step apparatus. Thus, the step may not be viewed as an obstacle. Further, aesthetic appearance of the step apparatus may be ensured.

Herein, according to the reference 2, for example, a door arm is provided at a front side lower end portion of an inner side surface of a slide door and is supported at an entrance of the vehicle. The door arm allows the slide door to slidably move to open and close the entrance. Therefore, in a case where the step apparatus is located at the entrance at which the slide door is arranged, if a space between the door arm and the step is not formed, a passenger may be prevented from inserting for example his/her foot between the door arm and the step.

However, in a case where the drive mechanism may be positioned adjacent to the door arm when the slide door is in an opened state because a disposition of each component mounted on the vehicle (the slide door and an actuator for the step, for example) is restrained and therefore a position for locating the step may not be selected flexibly, the step may be required to be positioned so as not to interfere with the drive mechanism (for example at a front side position relative to the drive mechanism). Therefore, according to such step apparatus for the vehicle, a space between the door arm and the step may not be reduced, Accordingly, a passenger may need to be careful when using the step. Thus, an improvement of usability of the step apparatus has been desired.

In addition, when using the step apparatus for the vehicle in order to guide the passenger accessing a back seat(s) of the vehicle, it may be required to provide the step apparatus at an entrance leading to the back seat(s) of the vehicle. However, in a case where the step apparatus for the vehicle may not be positioned sufficiently backward enough of the vehicle because of a restriction on the disposition of each components, convenience of the step may be reduced and/or the step may interfere with the passenger accessing the front seat(s) of the vehicle. Thus, usability of the step apparatus may be reduced.

Further, in a case where foreign object such as sand and/or snow is deposited on the step when the passenger uses the step, the foreign objects may enter the main body of the step apparatus and may adhere to an actuation transmitting mechanism of the movable step, thus interrupting a movement of the drive mechanism. In such a case, the step may not be moved as desired.

A need thus exists for a step apparatus for a vehicle, with which usability may be improved even in a case where an arrangement of components is restrained and which efficiently restrains malfunctioning of the drive mechanism 20 due to interference by a foreign object deposited on a step.

### SUMMARY OF THE INVENTION

According to an aspect of the present invention, a step apparatus for a vehicle is provided at an entrance of a vehicle body opened and closed by a slide door slidably supported to the vehicle body via a door arm in a longitudinal direction of the vehicle. The step apparatus includes a main body, a drive mechanism and a step. The main body is adapted to be provided at a position being lower than a vehicle floor. The drive mechanism provided in the main body. The step is provided in the main body to be movable between a protruded position and a retracted position relative to the main body in association with an opening movement and a closing movement of the slide door. The drive mechanism includes a drive portion driving the step to move to the protruded position relative to the main body in a width direction of the vehicle with an inclination towards a backward side of the vehicle in association with the opening movement of the slide door.

Due to the above described structure, the step is moved to the protruded position (moved outwardly) relative to the vehicle floor with the inclination towards the backward side of the vehicle in accordance with the movement of the door arm. Therefore, even in a case where the components such as the drive mechanism and an actuator for opening and closing the slide door is provided adjacent to the backward end portion of the step when the step is located at the retracted position in the main body of the step apparatus, the step is moved to a farther backward position than the retracted position without interfering with such components. The door arm is provided at the lower portion of the inner side surface of the slide door at the front end portion thereof. The slide door is slidably supported to the vehicle body via the door arm. The step is moved to the protruded position with the inclination towards the backward side of the vehicle, thus efficiently reducing a space between the step and the door arm provided at the slide door when viewing from an upper side of the vehicle (i.e., when viewing in a planar view).

Further according to an aspect of the present invention, the drive mechanism drives the step to move to the protruded position at which a part of the step overlaps the door arm viewing in a planar direction when the slide door is in a fully-opened position,

Due to the above described structure, a space between the step and the door arm is securely prevented from being formed. Accordingly, an operator (passenger) is prevented from inserting, for example, his/her leg between the step aud the door arm.

Still further according to an aspect of the present invention, the step includes a planar portion extending in parallel with the vehicle floor. Further, a front end of the planar portion in a longitudinal direction of the vehicle extends outwardly in the width direction of the vehicle with an inclination towards the backward side of the vehicle.

Due to the above described structure, the step is moved outwardly in the width direction of the vehicle with the inclination towards the backward side of the vehicle. Accordingly, when being moved to the protruded position, the step is moved to a farther backward position than the retracted position without interfering with other components, such as the drive mechanism and an actuator for moving the slide door, which are provided adjacent to the backward end portion of the step. Thus, the front end of the step is moved to be away from a front seat(s) (i.e., a driver seat and a front passenger seat) of the vehicle. Therefore, when being in the protruded state, the step is prevented from interrupting a passenger accessing the front scat(s). Thus, usability of the vehicle may be further improved.

Still further according to an aspect of the present invention, the drive portion includes a rail member guiding the step to move to the protruded position linearly with an inclination towards the backward side of the vehicle.

Due to the above described structure, the step is moved linearly to the protruded position along the rail members. Thus, an inefficient movement of the step may be restrained and the step is protruded smoothly.

Still further according to an aspect of the present invention, the drive mechanism includes an electric driving source driving the slide door to move to open and close the entrance of the vehicle body and driving the step to move between the protruded position and the retracted position.

Due to the above described structure, the drive mechanism is the electric driving source commonly employed as a door actuator and a step actuator. Accordingly, even in a case where the drive mechanism is required to be disposed adjacent to a backward end portion of the step, the step is sufficiently outwardly moved (protruded) in the width direction of the vehicle with the inclination towards the backward side of the vehicle without interfering with the drive mechanism.

Still further according to an aspect of the present invention, the step includes a raised portion extending upwardly at an inner end thereof in the width direction of the vehicle.

Due to the above described structure, the foreign object, such as snow or sand, deposited on the step in accordance with ingress and egress of the passenger to and from the vehicle is prevented from entering the main body from an end portion thereof by being blocked at the raised portion. Accordingly, the foreign object is restrained from entering the main body of the step apparatus by the raised portion of the step. Accordingly, the foreign object may hardly interfere with the drive mechanism. Thus, malfunctioning of the drive mechanism due to interference by the foreign object may be efficiently restrained from occurring.

Still further according to an aspect of the present invention, an opening of the main body, through which the step is moved between the protruded position and the retracted position, is provided with a foreign object-proof portion including a downwardly-extend portion extending downwardly from an upper side of the vehicle.

Still further according to an aspect of the present invention, a length of the downwardly-extend portion of the foreign object-proof portion is arranged not to interfere with the step. Further, the foreign object-proof portion is secured to the vehicle floor.

Due to the above described structure, the lower extending portion of the foreign object-proof portion is arranged to overlap the raised portion of the step. Accordingly, even when the foreign object deposited on the step is transferred towards an inner side of the main body because of protruding and retracting movement of the step and/or vibration due to driving of the vehicle, the foreign object may not reach the raised portion of the step without passing through a space between the foreign object-proof portion and the step. Accordingly, the foreign object deposited higher than the height of the raised portion is restrained from reaching the raised portion because of a vertical height of the space between the foreign object-proof portion and the step. Thus, the foreign object may be efficiently prevented from farther inwardly entering the main body than the raised portion.

Still further according to an aspect of the present invention, a seal member is provided between the raised portion of the step and the foreign object-proof portion. Further, the seal member closely contacts the step and the foreign object-proof portion when the step is located at the protruded position.

Due to the above described structure, a space between the raised portion of the step and the foreign object-proof portion is sealed by the seal member when the step is located at the protruded position. Therefore, the foreign object deposited on the step in the protruded state is further efficiently prevented from entering the main body from the space between the raised portion of the step 14 and the foreign object-proof portion.

Still further according to an aspect of the present invention, the drive mechanism is provided at a position being lower than the step in the main body. The step includes a step panel and a step cover portion covering a surface of the step panel and provided with a raised portion. Further, the raised portion is provided with a fixing portion for fixing the step panel and the step cover portion with each other.

Due to the above described structure, the fixing portion and the drive mechanism may hardly interfere with each other. Therefore, a position for providing the fixing portion may be defined more flexibly. Thus, the fixing portion may be provided at an appropriate position, so that the step cover portion and the step panel may be firmly fixed with each other.

Still further according to an aspect of the present invention, the main body, the drive mechanism and the step are disposed beneath the vehicle floor. Further, when the step is located at the retracted position in the main body, the slide door moved to close the entrance of the vehicle body closes an opening of the main body through which the step is moved between the protruded position and the retracted position.

Due to the above described structure, in a state where the entrance of the vehicle is closed by the slide door, the opening of the main body, through which the step is moved outwardly and inwardly in the width direction, is closed by the slide door. Therefore, the foreign object may be efficiently restrained from entering the main body through the opening thereof when the step is in the retracted state. In addition, in a case for providing the foreign object-proof portion, a member provided at the vehicle floor at the entrance serves as the foreign object-proof portion.

Still further according to an aspect of the present invention, the step apparatus including the main body, the drive mechanism and the step is provided at an area being outside of the vehicle body and being lower than a rocker rail provided at a lower end of the vehicle body. Further, when the step is located at the retracted position in the main body, the slide door moved to close the entrance of the vehicle body closes an opening of the main body through which the step is moved between the protruded position and the retracted position.

Due to the above described structure, even in a case where the step apparatus is provided at the outside area of the vehicle, the opening of the main body, through which the step is moved outwardly and inwardly in the width direction of the vehicle, is closed by the slide door. Accordingly, the foreign object is efficiently prevented from entering the main body of the step apparatus when the step is located at the retracted position.

As is described above, according to an aspect of the present invention, a space between the step and the door arm provided at the slide door may be securely reduced. In addition, malfunctioning of the drive mechanism due to interference by the foreign object may be efficiently restrained from occurring.

### BRIEF DESCRIPTION OF THE DRAWINGS

The foregoing and additional features and characteristics of the present invention will become more apparent from the following detailed description considered with reference to the accompanying drawings, wherein:

Fig. 1 is a planar view illustrating a slide door in an opened state and a step apparatus for a vehicle located at a protruded position, according to a first embodiment;

Fig. 2 is a cross sectional view taken along line II-II in Fig.1;

Fig. 3 is a planar view illustrating the slide door in a closed state and a step apparatus for a vehicle located at a retracted position, according to the first embodiment;

Fig. 4 is a cross sectional view taken along line IV-IV in Fig. 3;

Fig. 5 is a cross sectional view taken along line V-V in Fig. 1;

Fig. 6 is a perspective view illustrating the vehicle provided with the step apparatus for the vehicle;

Fig. 7 is a cross sectional view illustrating a structure of the step apparatus for the vehicle at a same position of line II-II in Fig. 1, according to a second embodiment;

Fig. 8 is a cross sectional shape illustrating a structure of the step apparatus for the vehicle at the same position of line n-11 in Fig.1, according to a third embodiment;

Fig. 9 is a cross sectional shape illustrating the structure of the step apparatus for the vehicle when the slide door is in the closed state, according to the third embodiment.

### DETAILED DESCRIPTION

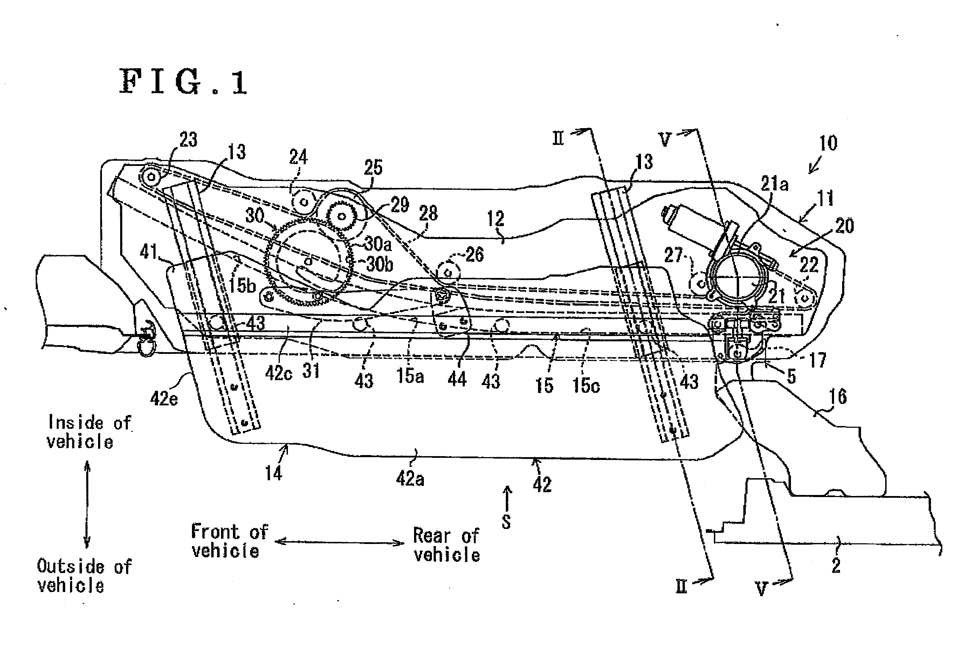

A first embodiment of a step apparatus 10 for a vehicle (hereinafter simply referred to as step apparatus 10) will be described in detail hereinafter with reference to Figs. 1 to 6.

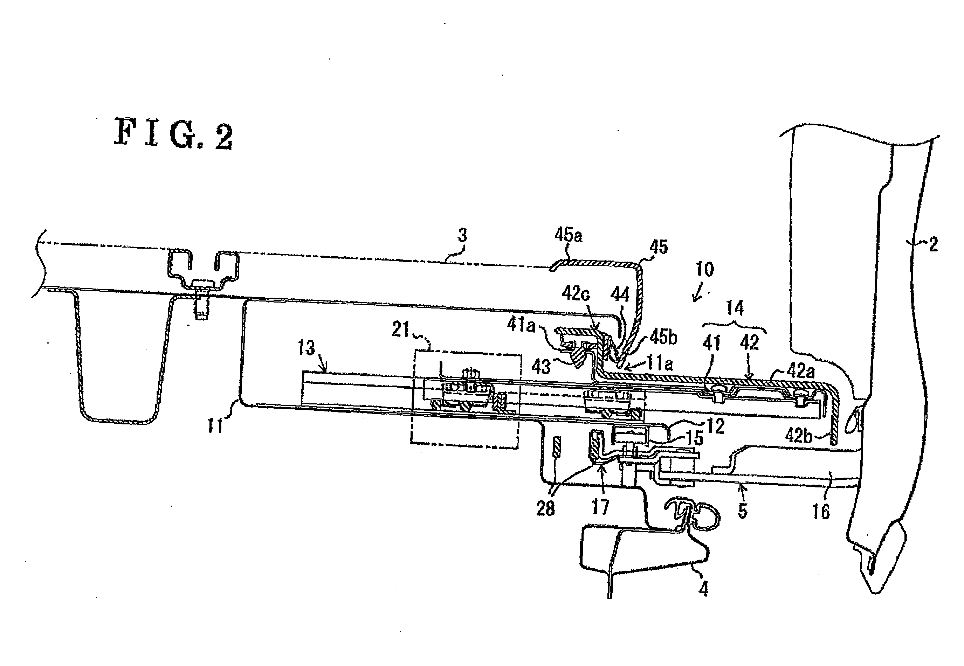

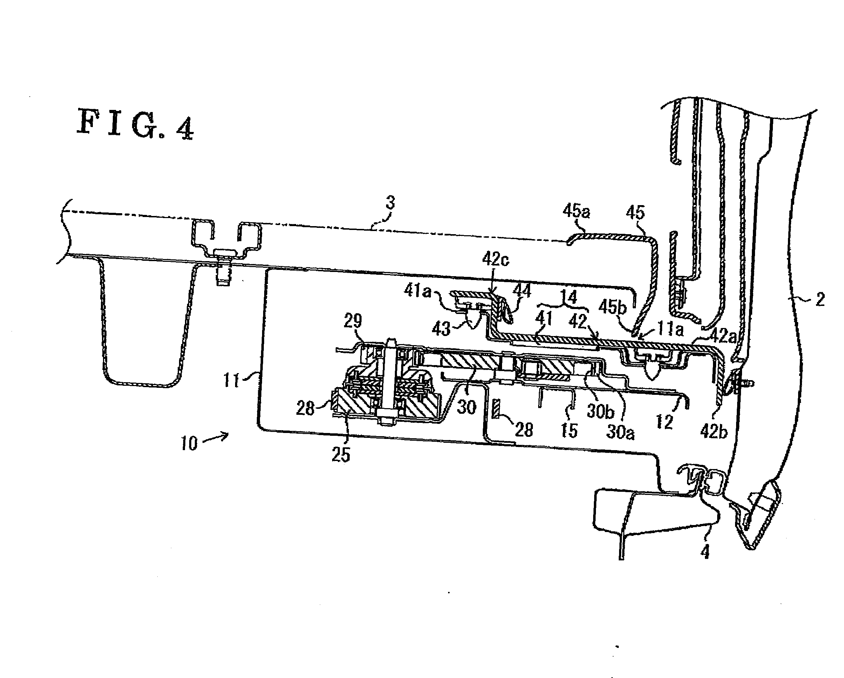

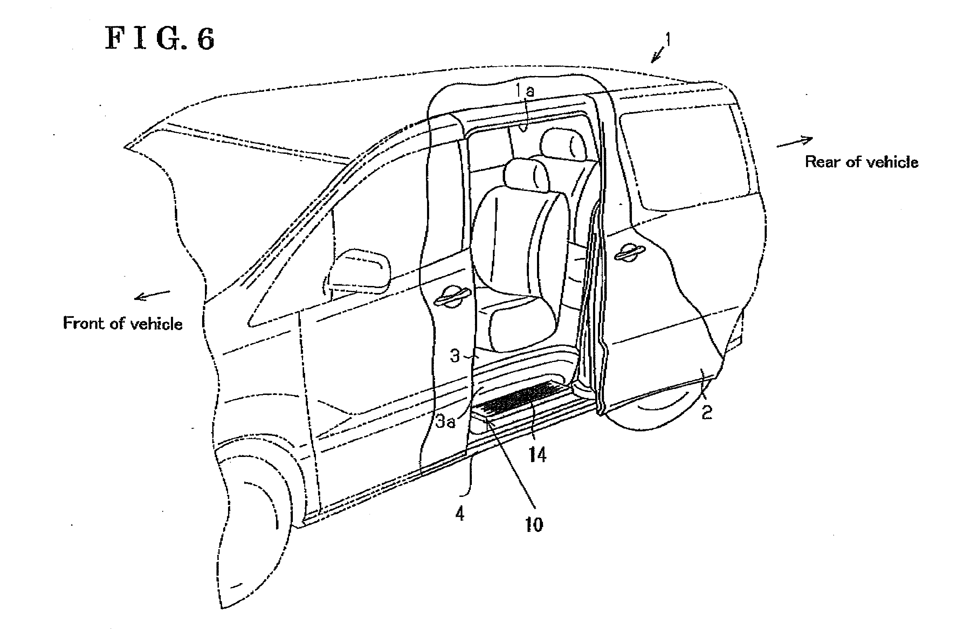

As illustrated in Fig. 6, a vehicle body 1 of the vehicle includes a door opening serving as an entrance 1a leading to a back seat(s) of the vehicle. The entrance 1a is formed at a side portion of the vehicle body 1 and is opened and closed by a slide door 2, which is provided at the vicinity of the entrance 1a and is movable in a longitudinal direction (front-rear direction) of the vehicle. Further, the step apparatus 10 is provided underneath a vehicle floor 3 at the entrance 1a. In other words, as illustrated in Figs. 2 and 4, the step apparatus 10 is disposed between the vehicle floor 3 and a rocker rail 4. Hereinafter, directions, such as "longitudinal (front and back)", "lateral (inner and outer)" and "vertical (up and dawn)", which are mentioned herein, correspond to an orientation of the vehicle.

As illustrated in Figs. 1 to 4, a main body 11 of the step apparatus 10 for the vehicle is formed in a box shape. Further, the main body 11 includes an opening 11a at an outside end in a width direction of the vehicle. The main body 11 of the step apparatus 10 is disposed at a position vertically lower than the vehicle floor 3 at the entrance 1a. The vehicle body 1 is securely provided with a support panel 12 at a vertically intermediate portion (i.e., an intermediate portion in a height direction) of the main body 11. The support panel 12 extends outwardly in the width direction of the vehicle so as not to interfere with the slide door 2. Further, a step 14 is supported to the support panel 12 via a drive portion 13 that includes a rail member. More specifically, the step 14 is supported to the upper surface of the support panel 12 via a pair of rail members 13 so as to be slidably movable between a protruded position and a retracted position relative to the main body 11, i.e., laterally inwardly and outwardly movable relative to the vehicle floor 3. In other words, the step 14 is allowed to move in an outward direction to be protruded from the main body 11 and in an inward direction to be retracted in the main body 11 along the rail members 13 through the opening 11a, which is an open portion of the main body 11. The rail members 13 are arranged to be in parallel with each other. Further, an outside end of each rail member 13 extends towards a backward side of the vehicle. Accordingly, the step 14 is moved to the protruded position (outwardly moved) relative to the main body 11 in the width direction of the vehicle with an inclination towards the backward side of the vehicle. In addition, the rail member 13 is formed in a linear shape, so that the step 14 is moved between the protruded position and the retracted position along a straight path. Further, the rail members 13 are disposed at a frontward end portion of the step 14 and a backward end portion thereof, respectively. Still further, as illustrated in Fig. 1, each rail member 13 is arranged at a predetermined angle relative to the longitudinal direction of the vehicle in a manner where the backward end portion of the step 14 overlaps a door arm 16, which will be described later, in a planar view when the step 14 is located at the protruded position. Accordingly, when the step 14 is located at the protruded position (protruded state), the backward end portion of the step 14 overlaps with the door arm 16 viewing in the planar view.

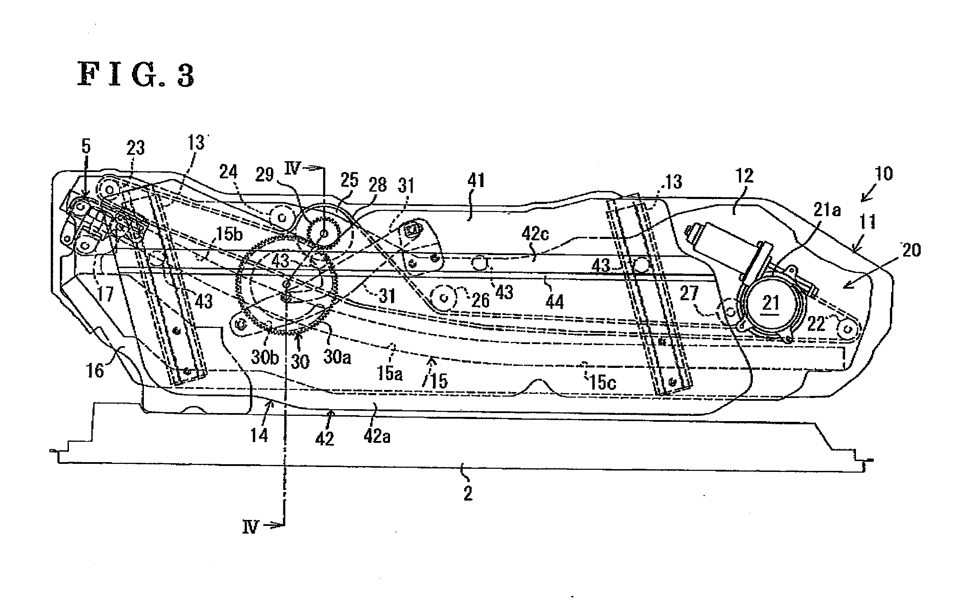

A guide rail 15 is securely provided at a lower surface of the support panel 12. The guide rail 15 is employed for guiding opening and closing operations of the slide door 2. The guide rail 15 serves as a part of an open-close supporting mechanism 5 for the slide door 2. More specifically, as best shown in Figs. 1 and 3, a bent portion 15a is provided at a longitudinally intermediate portion of the guide rail 15. Further, the guide rail 15 includes a curved portion 15b, at a front side relative to the bent portion 15a, which extends in the front direction of the vehicle and is inclined inwardly in the vehicle width direction. Still further, the guide rail 15 includes a straight portion 15c, at a rear side relative to the bent portion 1.5a, which linearly extends in the backward direction of the vehicle.

The door arm 16 and a roller mechanism 17 are provided at a lower portion of an inner side surface of the slide door 2. More specifically, the door arm 16 and the roller mechanism 17 are provided at a front end portion of the slide door 2 and serve as the open-close supporting mechanism 5 which protrudes inwardly in the width direction of the vehicle. The roller mechanism 17 is provided at an end portion of the door arm 16 and is assembled to the guide rail 15 so as to be rotatably movable along the guide rail 15. Then, when a roller of the roller mechanism 17 is rotatably moved along the guide rail 15, the slide door 2 is slidably moved in the longitudinal direction (front and rear directions) of the vehicle hence opening and closing the entrance 1a of the vehicle body 1.

Further, a drive mechanism 20 is mounted to the main body 11 at a position where the drive mechanism 20 does not interfere with the step 14 (i.e., at an outside of a movement area of the step 14). The drive mechanism 20 drives the slide door 2 to open and close the entrance 1a of the vehicle body 1 and drives the step 14 to move between the protruded position and the retracted position. More specifically, the drive mechanism 20 includes an actuating unit 21, plural idle gears 22, 23, 24,25,26 and 27, an actuation transmitting belt 28, a gear portion 29, a disk-shaped plate cam 30 and a link mechanism 31. The actuating unit 21 is disposed adjacent to a backward end portion of the step 14 being in the retracted position (retracted state). The actuation transmitting belt 28 is arranged around an output gear 21a of the actuating unit 21 and around the idle gears 22, 23,24,25,26 and 27. The gear portion 29 is provided on the idle gear 25. The plate cam 30 is provided with a gear portion 30a which is engaged with the gear portion 29. The link mechanism 31 is driven by the plate cam 30. Additionally, the output gear 21a, the idle gears 22 to 27 and the actuation transmitting belt 28 are provided at a lower position in the main body 11 relative to the step 14 so as not to interfere with the step 14. Further, according to the first embodiment, the drive mechanism 20 in6ludes all components for driving (actuating) the step 14, such as the rail members 13 (each serving as the drive portion), in addition to the above described components 21 to 31. Still further, the drive mechanism 20 may include an electric driving source for actuating the slide door 2 and the step 14.

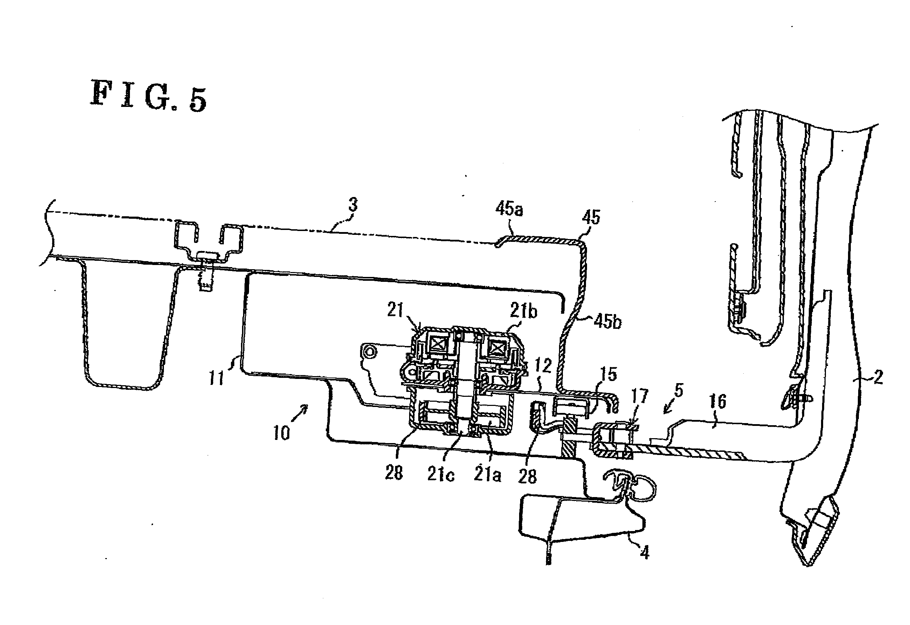

As illustrated in Fig. 5, the actuating unit 21 includes an actuating portion 21b (motor) and an output shaft 21c. The actuating portion 21b is provided on an upper surface of the support panel 12. The output shaft 21c extends downwardly from the actuating portion 21b towards a lower side of the support panel 12. The output gear 21a is assembled on the output shaft 21c. Additionally, in Fig. 2, a disposition of the actuating unit 21 is indicated with a two-dotted line so that height relation between the actuating unit 21, the rail member 13 and the step 14 is indicated.

The idle gears 22 to 27 and the actuation transmitting belt 28 are disposed at the lower side of the support panel 12, thus being prevented from interfering with the step 14. In addition, the idle gear 22 is disposed adjacent to a rear end of the guide rail 15. On the other hand, the idle gear 23 is disposed adjacent to a front end of the guide rail 15. More specifically, a portion of the actuation transmitting belt 28 disposed between the idle gears 22 and 23 is designed to extend along the guide rail 15, for example, by means of an auxiliary gear (not illustrated).

Then, an end portion of the roller mechanism 17 is securely connected to the portion of the actuation transmitting belt 28 disposed between the idle gears 22 and 23. More specifically, the end portion of the roller mechanism 17 is securely connected to the actuation transmitting belt 28 in a manner where the end portion of the roller mechanism 17 is located adjacent to the idle gear 23, i.e., adjacent to a front end portion of the guide rail 15 when the slide door 2 is in a fully-closed state as illustrated in Fig. 3. On the other hand, the end portion of the roller mechanism 17 is securely connected to the actuation transmitting belt 28 in a manner where the end portion of the roller mechanism 17 is located adjacent to the idle gear 22, i.e., adjacent to a rear end portion of the guide rail 15 when the slide door 2 is in a fully-opened state as illustrated in Fig.1.

Accordingly, when the output gear 21a is actuated to rotate in a counterclockwise direction in Figs. 1 and 3 by the actuating unit 21, the roller mechanism 17 is moved in the backward direction of the vehicle along the guide rail 15 in accordance with a rotation of the actuation transmitting belt 28. Therefore, the slide door 2 is moved in the backward direction of the vehicle, thus opening the entrance 1a. On the other hand, when the output gear 21a is actuated to rotate in a clockwise direction in Figs. 1 and 3 by the actuating unit 21, the roller mechanism 17 is moved in the frontward direction of the vehicle along the guide rail 15 in accordance with the rotation of the actuation transmitting belt 28. Therefore, the slide door 2 is moved in the frontward direction of the vehicle, thus closing the entrance 1a.

Herein, as illustrated in Figs. 1, 3 and 4, the idle gear 25 is provided with the gear portion 29, which protrudes towards an upper side of the support panel 12 and is coaxially rotated with the idle gear 25. Further, the disk-shaped plate cam 30, which includes at an outer periphery thereof the gear portion 30a engaged with the gear portion 29, is rotatably supported to the upper surface of the support panel 12. Therefore, when the idle gear 25 is rotated in accordance with an actuation of the actuating unit 21, the plate cam 30 is rotated in accordance with a rotation of the idle gear 25.

As illustrated in Fig. 1, the step 14 is provided with the link mechanism 31, which is employed for moving the step 14 between the protruded position and the retracted position along the guide rail 15. The link mechanism 31 is connected to a grooved cam 30b formed at the plate cam 30. Therefore, when the plate cam 30 is rotated in response to the actuation of the actuating unit 21, rotational torque (rotational motion) of the plate cam 30 is converted to linear torque (linear motion) by the grooved cam 30b and the link mechanism 31, and the linear torque is transmitted to the step 14. Thus, the step 14 is moved inwardly and outwardly in the width direction of the vehicle.

More specifically, when the output gear 21a of the actuating unit 21 is actuated to rotate in the counterclockwise direction in Fig. 1, the step 14 is moved in the outward direction of the vehicle to the protruded position from the main body 11 of the step apparatus 10 (see Figs. 1 and 2). The actuating unit 21 is disposed adjacent to the backward end portion of the step 14 in the retracted position. Therefore, when the step 14 is located at the protruded position (protruded state), an outward end of one rail member 13 disposed at the backward side (hereinafter, referred to as backward side rail member 13) and the backward end portion of the step 14 are arranged to overlap with the actuating unit 21 when viewing from a side surface of the vehicle (i.e., from a direction indicated with an arrow S in Fig. 1). Further, when the step 14 is located at the protruded position (i.e., when the slide door 2 is in the fully-opened state), a backward portion of the step 14 overlaps with the door arm 16 viewing in the planar view (Fig. 1). Therefore, even in a case where the actuating unit 21 is disposed at the vicinity of the backward portion of the step 14 and the backward side rail member 13, a space between the step 14 and the door arm 16 decreases while the backward side rail member 13 and the step 14 are prevented from interfering with the actuating unit 21.

On the other hand, when the output gear 21a of the actuating unit 21 is actuated to rotate in the clockwise direction in Fig. 1, the step 14 is moved inwardly in the vehicle width direction to the retracted position in the main body 11 (see Figs. 3 and 4). As is described, the actuating unit 21 serves as an actuator for opening and closing the slide door 2 and for driving the step 14.

Thus, because of an operation of the drive mechanism 20, the step 14 is moved outwardly in the vehicle width direction to the protruded position in the main body 11 in association with an opening movement of the slide door 2. In the same manner, because of the operation of the drive mechanism 20, the step 14 is moved inwardly in the vehicle width direction to the retracted position in the main body 11 in association with a closing movement of the slide door 2.

Hereinafter, a structure of the step 14 will be described in detail.

As illustrated in Figs. 2 and 4, the step 14 includes a step panel 41 and a step cover portion 42. The step panel 41 is assembled on the rail members 13. The step cover portion 42 is arranged on the step panel 41 so as to cover an upper surface (surface) of the step panel 41.

The step panel 41 is formed in a substantially planar plate shape extending in a horizontal direction of the vehicle and is assembled on the rail members 13, for example, at an inward end portion thereof. Further, a hooked bent portion 41a with an inverted L shaped cross section is formed in a standing manner (an upright manner) at a predetermined portion of the step panel 41. The bent portion 41a is employed for securing the step panel 41 with the step cover portion 42.

The step cover portion 42 extends in the horizontal direction of the vehicle. Further, the step cover portion 42 includes a planar portion 42a, a bent portion 42b and a raised portion 42c. More specifically, the planar portion 42a is moved between the protruded position and the retracted position of the step 14 in accordance with the movement of the step panel 41. The bent portion 42b is formed by downwardly bending a laterally outward end of the planar portion 42a. The raised portion 42c is formed by upwardly bending a laterally inner end of the planar portion 42a. As illustrated in Figs. 1 and 3, a front end 42e of the planar portion 42a of the step cover portion 42 extends outwardly in the width direction of the vehicle with an inclination towards the backward side of the vehicle. Further, the bent portion 42b is formed along entire outward end of the planar portion 42a in the width direction of the vehicle, and the raised portion 42c is formed along entire inward end of the planar portion 42a in the width direction of the vehicle.

As illustrated in Figs. 2 and 4, the raised portion 42c is formed in a hooked shape with an inverted L shaped cross section. Further, the raised portion 42c includes a vertical potion and a parallel portion. More specifically, the raised portion 42c is arranged to be approximately vertical relative to the planar portion 42a at the vertical portion and is arranged to be approximately in parallel with the planar portion 42a at the parallel portion located farther upwardly than the planar portion 42a. Therefore, a foreign object, such as snow or sand, deposited on the planar portion 42a in accordance with ingress and egress of the passenger to and from the vehicle is prevented from entering the main body 11 from an end portion thereof by being blocked at the raised portion 42c. Accordingly, the foreign object is restrained from entering the main body 11 of the step apparatus 10 by the raised portion 42c of the step cover portion 42.

Further, as illustrated in Figs. 1 and 2, the parallel portion of the raised portion 42c is provided with plural fixing clips 43, each serving as a fixing portion. The fixing clips 43 are disposed at predetermined intervals and are engaged with the bent portion 41a of the step panel 41, respectively. Each of the fixing clips 43 is engaged with the facing bent portion 41a and therefore, the step panel 41 and the step cover portion 42 are fixed with each other. Then, a seal member 44 is attached to an outward side surface of the vertical portion of the raised portion 42c. The seal member 44 is composed of flexible synthetic resin and is arranged to extend over the inward end of the step cover portion 42c.

As illustrated in Figs. 2 and 4, an inverted L-shaped cover plate 45 is disposed at the vehicle floor 3 at the entrance 1a. The cover plate 45 includes a planar portion 45a and a drooped portion 45b. The planar portion 45a extends approximately in parallel with the vehicle floor 3. The drooped portion 45b extends downwardly from a laterally outward end of the planar portion 45a, and an end of the drooped portion 45b is arranged adjacently to the upper surface of the step cover portion 42. The drooped portion 45b of the cover plate 45 extends to a predetermined position so that the drooped portion 45b overlaps the raised portion 42c of the step cover portion 42. In other words, when seen from the side surface of the vehicle (i.e., from the direction indicated with the arrow S in Fig. 1), the drooped portion 45b of the cover plate 45 extends to the predetermined position so as to overlap the raised portion 42c at the opening 11a of the step apparatus 10, through which the step 14 is moved between the protruded position and the retracted position. An end of the drooped portion 45b is arranged adjacently to the upper surface of the step cover portion 42. Therefore, the foreign object deposited on the planar portion 42a of the step 14 is prevented from entering the main body 11 of the step apparatus 10 by the drooped portion 45b of the cover plate 45. a length of the drooped portion 45b of the cover plate 45 is arranged so as not to interfere with the step 14. Accordingly, the drooped portion 45b serves as a downwardly-extend portion and the cover plate 45 serves as a foreign object-proof portion.

Further, the drooped portion 45b is formed in a slightly curved manner so that an inner side surface of the drooped portion 45b is arranged to closely contact the seal member 44 when the step 14 is located at the protruded position as illustrated in Fig. 2. In other words, when the step 14 is located at the protruded position, the seal member 44 is arranged between the raised portion 42c of the step cover portion 42 and the drooped portion 45b of the cover plate 45 in a closely contacting manner. Therefore, when the step 14 is located at the protruded position (protruded state), the foreign object disposed on the planar portion 42a of the step 14 is restrained from entering the main body 11 through a space between the raised portion 42c of the step cover portion 42 and the cover plate 45.

Therefore, according to the first embodiment, effects described hereinafter will be obtained.

(1) The step 14 is moved outwardly in the width direction of the vehicle with an inclination towards the backward side of the vehicle in accordance with the movement' of the door arm 16 provided at the slide door 2. Accordingly, when being moved to the protruded position, the step 14 is moved to a farther backward position than the retracted position (i.e., the protruded position of the step 14 is arranged farther backwardly than the retracted position of the step 14) without interfering with other components, such as the drive mechanism 20, which are provided adjacent to the backward end portion of the step 14. Then, by moving the step 14 outwardly in the width direction of the vehicle with the inclination towards the backward side of the vehicle, the space between the door arm 16 and the step 14 is efficiently narrowed or even prevented from being formed when viewing in from the upward side of the vehicle (i.e., viewing in the planar view). In addition, the step 14 is moved linearly to the protruded position along the rail members 13. Thus, an inefficient movement of the step 14 may be restrained and the step 14 is moved smoothly.

(2) When the step 14 is positioned at the protruded position, the step 14 and the door arm 16 overlap when viewing in the planar view. Therefore, a space between the step 14 and the door arm 16 is securely prevented from being formed. Accordingly, an operator (passenger) is prevented from inserting, for example, his/her leg between the step 14 and the door arm 16.

(3) When the step 14 is located at the retracted position, the actuating unit 21 is disposed adjacent to the backward end portion of the step 14. On the other hand, when the step 14 is located at the protruded position, the outward end of the backward side rail member 13 and the backward end portion of the step 14 overlap the actuating unit 21 when viewing from the side surface of the vehicle (i.e., from the direction indicated with the arrow S in Fig. 1). Therefore, the step 14 is sufficiently outwardly moved (protruded) in the width direction of the vehicle with the inclination towards the backward side of the vehicle without interfering with the actuating unit 21. A space between the door arm 16 and the step 14 is efficiently restrained from being formed accordingly.

(4) The step apparatus 10 for the vehicle is provided at the entrance 1a leading to the backseat(s) of the vehicle, and the step 14 is outwardly moved in the width direction of the vehicle with the inclination towards the backward side of the vehicle. Therefore, the step 14 is prevented from interrupting a passenger accessing a front seat(s) (i.e., a driver seat and a front passenger seat) of the vehicle. Thus, usability of the vehicle may be further improved. In other words, even in a case where the step apparatus 10 is required to be disposed closer to the front seat(s) (for example, at a position where the step apparatus 10 overlaps a center pillar in a planar view) because of a constraint on a disposition and an arrangement of the components, the step 14 may be protruded into the entrance 1a leading to the back seat(s). Accordingly, convenience for the passenger accessing the backseat(s) of the vehicle may be assured and in the mean time, the step 14 may be prevented from interrupting the passenger accessing the front seat(s) of the vehicle. Thus the usability of the vehicle may be further improved. Furthermore, the front end 42e of the planar portion 42a extends outwardly in the width direction of the vehicle with the inclination towards the backward side of the vehicle. Accordingly, the step 14 is further efficiently prevented from interrupting the passenger accessing the front scat(s) (i.e., the driver seat and the front passenger seat) of the vehicle,

(5) The foreign object deposited on the plate shaped planar portion 42a of the step 14 is prevented from entering the main body 12 of the step apparatus 10 from the inward end portion of the planar portion 42a (i.e., from a main body side end portion thereof) by being blocked at the raised portion 42c. Thus, the foreign object is efficiently restrained from entering the main body 11 of the step apparatus by the raised portion 42c of the step 14. Accordingly, the foreign object may hardly interfere with the drive mechanism 20 (i.e., the rail member 13, the actuating unit 21, the idle gears 22 to 27, the actuation transmitting belt 28, the gear portion 9 and the plate cam 30, for example). Thus, malfunctioning of the drive mechanism 20 due to interference by the foreign object may be efficiently restrained from occurring,

(6) The drooped portion 45b of the cover plate 45 is arranged to overlap the raised portion 42c of the plate cover portion 42. Accordingly, the cover plate 45 serves as the foreign object-proof portion. Even when the foreign object deposited on the step 14 is transferred towards an inner side of the main body 11 because of protruding and retracting movement of the step 14 and/or vibration due to driving of the vehicle, the foreign object may not reach the raised portion 42c of the step 14 without passing through a space between the cover plate 45 and the step 14. Accordingly, the foreign object deposited higher than the height of the raised portion 42c is restrained from reaching the raised portion 42c because of a vertical height of the space between the cover plate 45 and the step 14. Thus, the foreign object may be efficiently prevented from farther inwardly entering the main body 11 than the raised portion 42c.

(7) When the step 14 is located at the protruded position, the space between the raised portion 42c of the plate cover portion 42 and the cover plate 45 is sealed by the seal member 44. Therefore, the foreign object deposited on the step 14 in the protruded state is further efficiently prevented from entering the main body 11 from the space between the raised portion 42c of the plate cover portion 42 and the cover plate 45.

(8) The fixing clip 43 (serving as the fixing portion), which secures the step panel 41 with the step cover portion 42 configuring the step 14, is provided at the bent portion 41a, which is formed by upwardly bending a part of the step panel 41, and at the raised portion 42c of the step cover portion 42. Therefore, the fixing clip 43 and the drive mechanism 20 may hardly interfere with each other, so that a position for providing the fixing clip 43 may be defined more flexibly. Accordingly, the fixing clip 43 is provided at an appropriate position, so that the step cover portion 42 and the step panel 41 may be firmly fixed with each other.

(9) In a state where the entrance 1a of the vehicle is closed by the slide door 2, the opening 11a of the main body 11, through which the step 14 is moved outwardly and inwardly in the width direction, is closed by the slide door 2. Therefore, the foreign object may be efficiently restrained from entering the main body 11 through the opening 11a thereof when the step 14 is in the retracted state. In addition, the cover plate 45, which is provided at the vehicle floor 3 at the entrance 1a, serves as the foreign object-proof portion. Accordingly, the foreign object-proof portion may not be provided separately, thus achieving a reduction of the number of the components.

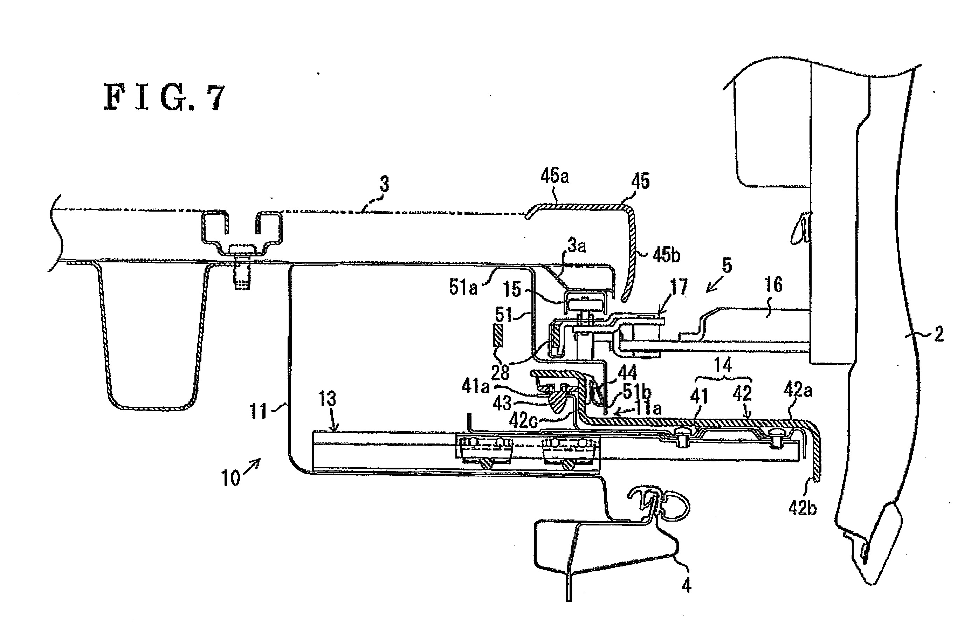

Next, a second embodiment of the present invention will be described hereinafter with reference to Fig. 7. According to following embodiments, different configurations and effects will be mainly explained, however, components used in the same manner as the first embodiment will be indicated by the same reference numerals and a description will be omitted.

According to the second embodiment, a disposition of the open-close supporting mechanism 5 (guide rail 15, the door arm 16 and the roller mechanism 17) of the slide door 2 and a disposition of the step apparatus 10 are arranged to be different from those used in the first embodiment.

As illustrated in Fig. 7, the open-close supporting mechanism 5 is disposed beneath the vehicle floor 3. More specifically, the guide rail 15 of the open-close supporting mechanism 5 is provided at a lower side of a floor panel 3a of the vehicle floor 3. Then, the roller mechanism 17 provided at the door arm 16 of the slide door 2 is assembled on the guide rail 15. In other words, each of the door arm 16 and the roller mechanism 17 is provided vertically higher relative to the slide door 2 according to the second embodiment than that of the first embodiment.

The step apparatus 10 for the vehicle is provided between the open-close supporting mechanism 5 and the rocker rail 4. In other words, the step apparatus 10 is disposed so that the opening 11a of the main body 11, through which the step 14 is moved outwardly and inwardly in the vehicle width direction, is provided vertically lower than the open-close supporting mechanism 5.

A separate plate 51 is provided in the main body 11. The separate plate 51 extends from an upper side of the roller mechanism 17 towards a lower side thereof, thus separating the step apparatus 10 and the open-close supporting mechanism 5. The separate plate 51 is one of components of the main body 11. An upper end portion 51a of the separate plate 51 is securely connected to a lower surface of the floor panel 3a, and a lower end portion 51b of the separate plate 51 extends to a position right above the step 14. More specifically, the lower end portion 51b of the separate plate 51 extends to a predetermined position so that the end portion 51b overlap the raised portion 42c of the step cover portion 42. In other words, the lower end portion 51b of the separate plate 51 extends to the predetermined position so as to overlap the raised portion 42c of the step cover portion 42 at the opening 11a of the step 10, through which the step 14 is moved outwardly and inwardly in the width direction, when viewing from the side surface of the vehicle (i.e., from the same direction as the direction indicated with the arrow S in Fig. 1). Then, an edge of the lower end portion 51b of the separate plate 51 is adjacently arranged to the upper surface of the step cover portion 42 of the step 14. Therefore, the foreign object deposited on the planar portion 42a of the step 14 is prevented from entering the main body 11 of the step apparatus 10 by the lower end portion 51b of the separate plate 51. According to the second embodiment, the separate plate 51 having the lower end portion 51b (serving as the downwardly-extend portion) serves as the foreign object-proof portion. Thus, the same effect described in the first embodiment, item (5), will be obtained in the second embodiment.

Further, as illustrated in Fig. 7, an inward side surface of the lower end portion 51b of the separate plate 51 is arranged to closely contact the seal member 44 when the step 14 is in the protruded state. More specifically, the seal member 44 is provided between the raised portion 42c of the step cover portion 42 and the separate plate 51 in a closely contacting manner when the step 14 is in the protruded state. Therefore, when the step 14 is in the protruded state, the foreign object deposited on the plate shaped planar portion 42a of the step 14 is efficiently prevented from entering the main body 11 of the step apparatus 10 from the space between the raised portion 42c of the step cover portion 42 and the separate plate 51. In other words, the separate plate 51 including the lower end portion 51b serves as the foreign object-proof portion. Accordingly, the same effect described in the first embodiment, item (6), will be obtained in the second embodiment.

The step apparatus 10 arranged as aforementioned is positioned at an upper side of the rocker rail 4, i.e., at an inside of the vehicle body 1. Accordingly, in the state where the entrance 1a is closed by the slide door 2, the opening 11a of the main body 11, through which the step 14 is moved outwardly and inwardly in the width direction, is closed by the slide door 2. Therefore, the foreign object may be efficiently prevented from entering the main body 11 of the step apparatus 10 when the step 14 is located at the retracted position (retracted state),

Accordingly, according to the second embodiment, the following effect may be obtained in addition to the same effects described in the first embodiment, items (1) to (8).

(10) The step apparatus 10 is disposed between the open-close supporting mechanism 5 and the rocker rail 4, and therefore the open-close supporting mechanism 5 is arranged between the vehicle floor 3 and the step 14. Thus, an appropriate distance may be ensured between the vehicle floor 3 and the step 14. In addition, the rocker rail 4 is arranged between the step 14 and the ground. Therefore, an appropriate distance may be ensured between the step 14 and the ground. Accordingly, by locating the step apparatus 10 for the vehicle at such position, the step 14 may be located at an appropriate position between the vehicle floor 3 and the ground. In addition, the opening 11a of the main body 11, through which the step 14 is moved outwardly and inwardly in the width direction of the vehicle, is closed by the slide door 2 when the step 14 is in the retracted state. Therefore, the foreign objects may be prevented from entering the main body 11 of the step apparatus 10 when the step 14 is located at the retracted position.

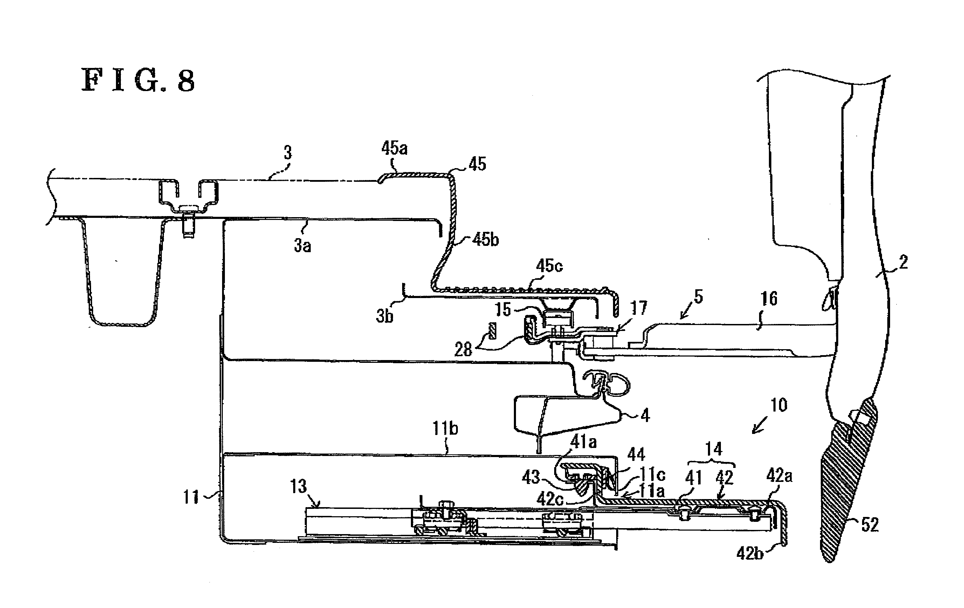

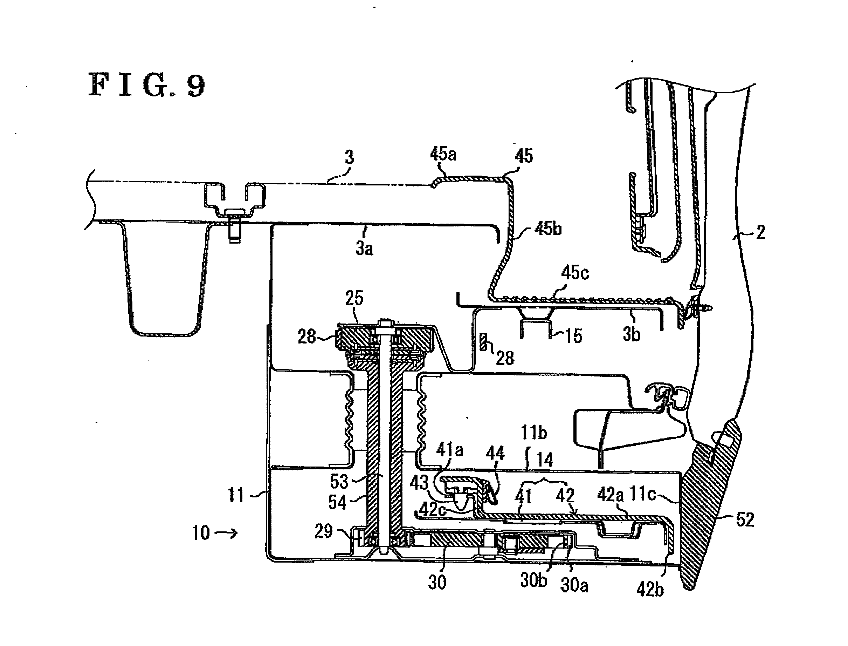

Next, a third embodiment of the present invention will be described hereinafter with reference to Figs. 8 and 9.

According to the third embodiment, a disposition of the open-close supporting mechanism 5 (guide rail 15, door arm 16 and the roller mechanism 17) of the slide door 2 and a disposition of the step apparatus 10 are mainly different from those in the first and second embodiments.

As illustrated in Figs. 8 and 9, an auxiliary step 45c is provided at the drooped portion 45b of the cover plate 45. The auxiliary step 45c extends in the horizontal direction of the vehicle at a lower position than the vehicle floor 3, so that one step of the passenger can be closer to the ground. Further, the auxiliary step 45c of the cover plate 45 is disposed on an auxiliary step plate 3b formed at a lower side relative to the vehicle floor panel 3a. Further, the open-close supporting mechanism 5 is provided beneath the auxiliary step plate 3b. More specifically, the guide rail 15 is securely connected at a lower surface of the auxiliary step plate 3b, and the door arm 16 is assembled on the guide rail 15 via the roller mechanism 17. Still further, the rocker rail 4 is provided beneath the open-close supporting mechanism 5 including the guide rail 15, the door arm 16 and the roller mechanism 17.

Then, the step apparatus 10 is provided below the rocker rail 4. In other words, according to the third embodiment, the step apparatus 10 is provided at a lowest end of the vehicle body 1 which is outside of the vehicle body 1. In the step apparatus 10 arranged in such manner, a drooped portion 11c is formed at an outward end, in the width direction of the vehicle, of an upper surface 11b of the main body 11 so as to downwardly extend to a position right above the step 14 at the opening 11a of the main body 11. More specifically, the drooped portion 11c extends to a predetermined position so that the drooped portion 11c overlaps the raised portion 42c of the step cover portion 42. In other words, the drooped portion 11c of the main body 11 extends to the predetermined position so as to overlap the raised portion 42c of the step cover portion 42 when viewing from the side surface of the vehicle (i.e., from the same direction as the direction indicated with the arrow S in Fig. 1) at the opening 11a of the main body 11, through which the step 14 is moved outwardly and inwardly in the width direction of the vehicle. Further, an end of the drooped portion 11c is arranged adjacently to the upper surface of the step cover portion 42. Therefore, the foreign object deposited on the planar portion 42a of the step 14 is prevented from entering the main body 11 of the step apparatus 10 by the drooped portion 11c formed at the upper surface portion 11b of the main body 11. Thus, according to the third embodiment, the drooped portion 11c serves as the downwardly extend portion and the upper surface portion 11b serves as the foreign object-proof portion. Accordingly, the same effect described in the first embodiment, item (5) may be obtained in the third embodiment.

Further, as illustrated in Fig. 8, the seal member 44 is arranged to closely contact the inner side surface of the drooped portion 11c of the main body 11 when the step 14 is located at the protruded position. More specifically, the seal member 44 is arranged between the raised portion 42c of the step cover portion 42 and the drooped portion 11c of the main body 11 in the closely contacting manner when the step 14 is in the protruded state. Therefore, when the step 14 is located at the protruded position (protruded state), the foreign object deposited on the plate shaped planar portion 42a of the step cover portion 42 is efficiently restrained from entering the main body 11 through a space between the raised portion 42c and the separate plate 51. In other words, according to the third embodiment, the upper surface 11b including the drooped portion 11c of the main body 11 serves as the foreign object-proof portion. Accordingly, the same effect described in the first embodiment, item (6), may be obtained in the third embodiment.

Herein, a door extension 52 is securely provided at a lower end of the slide door 2. The door extension 52 is provided along entire lower end of the slide door 2. More specifically, in a state where the entrance 1a of the vehicle body 1 is closed by the slide door 2 as illustrated in Fig. 9, an inner side surface of the door extension 52 is arranged to closely contact the opening 11a of the main body 11. Thus, the door extension 52 is configured in a form for closing the opening 11a of the main body 11, through which the step 14 is moved outwardly and inwardly in the width direction. In other words, the door extension 52 serves as a closing portion for closing the opening 11a of the main body 11 of the step apparatus 10. Accordingly, according to the third embodiment, even though the step apparatus 10 is provided at outside of the vehicle body 1, the opening 11 is tightly closed by the door extension 52 of the slide door 2 when the entrance 1a of the vehicle body 1 is closed by the slide door 2, thus preventing the foreign objects from entering the main body T1 of the step apparatus 10 when the step 14 is located at the retracted position.

In addition, as illustrated in Fig. 9, the idle gear 25 of the drive mechanism 20 and the gear portion 29 engaged with the plate cam 30 are connected to a connecting portion 54, which is rotatably supported to an elongated support shaft 53. Therefore, protruding and retracting operations of the step 14 are performed in accordance with the opening and closing operations of the slide door 2 which is driven by the actuating unit 21.

Thus, according to the third embodiment, the following effect may be obtained in addition to the effects described in the first embodiment, items (1) to (8).

(11) The door extension 52 is provided at the lower end of the slide door 2. Therefore, even in a case where the step apparatus 10 for the vehicle is provided at the outside area of the vehicle, the opening 11a of the main body 10, through which the step 14 is moved outwardly and inwardly in the width direction of the vehicle, is closed by the door extension 52 of the slide door 2. Accordingly, the foreign object is efficiently prevented from entering the main body 11 of the step apparatus 10 when the step 14 is located at the retracted position. In addition, the opening 11a of the main body 11 of the step apparatus 10 is not exposed to the outside, thus assuring aesthetic appearance of the vehicle.

Additionally, the embodiments described above may be modified as will be described hereinafter.

The pair of rail members 13, which guides the movement of the step 14, may not necessarily be arranged to guide the step 14 to move to the protruded position where the step 14 overlaps the actuating unit 21 when viewing from the side surface of the vehicle (i.e., from the direction indicated with the arrow S in Fig. 1) in the first to third embodiments. Alternatively, the rail member 13 may be arranged to move the step 24 outwardly in the width direction of the vehicle with the inclination towards the backward side of the vehicle so as to reduce a space between the door arm 16 and the step 14.

Further, the rail members 13 may not necessarily be arranged to move the step 14 to the position to overlap the door arm 16 when viewing in the planar view (Fig.1).

Still further, components arranged adjacent to the backward end portion of the step 14 may not necessarily be the actuating unit 21. Alternatively, other components mounted on the vehicle may be arranged adjacent to the backward end portion of the step 14.

Still further, the step 14 may not necessarily be provided with the raised portion 42c of the step cover portion 42.

The front end 42e of the planar portion 42a, which extends outwardly in the width direction of the vehicle, may not necessarily be formed with an inclination towards the backward side of the vehicle. Alternatively, a form of the planar portion 42a of the step 14 may be properly modified in accordance with a form and a size of the entrance 1a of the vehicle body 1. Further, according to the first embodiment, the drooped portion 45b of the cover plate 45 may not necessarily serve as the foreign object-proof portion. Alternatively, the foreign object-proof portion may be configured, for example, by the upper surface portion 11b of the main body 11 in the same manner as the third embodiment. Still further, according to the third embodiment, the lower end of the slide door 2 may not necessarily be provided with the door extension 52. Alternatively, the opening 11a of the main body 11, through which the step 14 is moved outwardly and inwardly in the width direction of the vehicle, may not be closed when the step 14 is in the retracted state. Additionally, such foreign object-proof portion may be omitted.

According to the first to third embodiments, the seal member 44, which is arranged between the raised portion 42c of the step cover portion 42 of the step 14 and the foreign object-proof portion (the cover plate 45 including the drooped portion 45b, the separate plate 51 including the lower end portion 51b, the upper surface portion 11b including the drooped portion 11c of the main body 11), may not necessarily be securely attached to the raised portion 42c of the step cover plate 42 of the step 14. Alternatively, the seal member 44 may be securely attached to a foreign object-proof portion. Additionally, in a case where the seal member 44 is secured to the raised portion 42c, the foreign object may be more efficiently prevented from penetrating into the min body 11 after passing above the raised portion 42c than in a case where the seal member 44 is secured to the foreign object-proof portion. Still in addition, the seal member 44 may be omitted.

According to the first to third embodiments, the fixing clip 43 serving as the fixing portion for securing the step plate 41 and the step cover portion 42 with each other may not necessarily be provided at the raised portion 42c of the step cover portion 42. Alternatively, the fixing clip 43 may be provided at other positions, such as at the plate shaped planar portion 42a, for example. In addition, the step 14 may not necessarily be structured with the step plate 41 and the step cover portion 42. Alternatively, those components may be formed integrally.

Still further, the actuating unit 21 may not necessarily be commonly employed as a door actuator for performing the opening and closing operations of the slide door 2 and as a step actuator for performing the protruding and retracting operations of the step 14. Alternatively, the door actuator and a step actuator may be configured separately.

Still further, according to the first to third embodiments, the step apparatus 10 for the vehicle may not necessarily be provided at the entrance 1a which is opened and closed by the slide door 2.

Still further, according to the first to third embodiments, the step apparatus 10 for the vehicle may not necessarily be disposed at the entrance leading to the back seat(s). Alternatively, the step apparatus 10 for the vehicle may be provided at an entrance leading to the front seat(s).

Still further, according to the first to third embodiments, the drive mechanism 20 may be configured by other known mechanism, such as a link structure, for example.

Still further, according to the first to third embodiments, two rail members 13 are provided as the drive portion. Therefore, strength of the rail members 13 may be obtained and loading capability of the rail members 13 in a moving state may be improved, thus achieving a smooth movement of the step 14. Alternatively, more than two rail members may be provided at the step apparatus 10 depending on a size and/or a shape of the step 14.

As is described above, according to an aspect of the present invention, a space between the step 14 and the door arm 16 provided at the slide door 2 is securely reduced. In addition, malfunctioning of the drive mechanism 20 due to interference by the foreign object may be efficiently restrained from occurring.
A step apparatus (10) for a vehicle is provided at an entrance (1a) of a vehicle body (1) opened and closed by a slide door (2) slidably supported to the vehicle body (1) via a door arm (16) in a longitudinal direction of the vehicle. The step apparatus (10) includes a main body (11) provided at a lower position than a vehicle floor (3), a drive mechanism (20) provided in the main body (11), and a step (14) provided in the main body (11) to be movable between a protruded position and a retracted position relative to the main body (11) in association with an opening movement and a closing movement of the slide door (2). The drive mechanism (20) includes a drive portion (13) driving the step (14) to move to the protruded position relative to the main body (11) in a width direction of the vehicle with an inclination towards a backward side of the vehicle in association with the opening movement of the slide door (2).

## Claims

1. A step apparatus (10) for a vehicle adapted to be provided at an entrance (1a) of a vehicle body (1) opened and closed by a slide door (2) slidably supported to the vehicle body (1) via a door arm (16) in a longitudinal direction of the vehicle, the step apparatus (10) comprising:
a main body (11) adapted to be provided at a position being lower than a vehicle floor (3);
a drive mechanism (20) provided in the main body (11); and
a step (14) provided in the main body (11) to be movable between a protruded position and a retracted position relative to the main body (11) in association with an opening movement and a closing movement of the slide door (2), wherein
the drive mechanism (20) includes a drive portion (13) driving the step (14) to move to the protruded position relative to the main body (11) in a width direction of the vehicle with an inclination towards a backward side of the vehicle in association with the opening movement of the slide door (2).

2. A step apparatus (10) for a vehicle according to claim 1, wherein
the drive mechanism (20) drives the step (14) to move to the protruded position at which a part of the step (14) overlaps the door arm (16) viewing in a planar direction when the slide door (2) is in a fully-opened position.

3. A step apparatus (10) for a vehicle according to claim 1, wherein
the step (14) includes a planar portion (42a) extending in parallel with the vehicle floor (3), and a front end (42e) of the planar portion (42a) in a longitudinal direction of the vehicle extends outwardly in the width direction of the vehicle with an inclination towards the backward side of the vehicle.

4. A step apparatus (10) for a vehicle according to claim 1, wherein
the drive portion (13) includes a rail member guiding the step (14) to move to the protruded position linearly with an inclination towards the backward side of the vehicle.

5. A step apparatus (10) for a vehicle according to claim 1, wherein
the drive mechanism (20) includes an electric driving source driving the slide door (2) to move to open and close the entrance (1a) of the vehicle body (1) and driving the step (4) to move between the protruded position and the retracted position.

6. A step apparatus (10) for a vehicle according to claim 1, wherein
the step (14) includes a raised portion (42c) extending upwardly at an inner end thereof in the width direction of the vehicle.

7. A step apparatus (10) for a vehicle according to claim 1, wherein
an opening (11a) of the main body (11), through which the step is moved between the protruded position and the retracted position, is provided with a foreign object-proof portion (45, 51, 11b) including a downwardly-extend portion (45b, 51b, 11c) extending downwardly from an upper side of the vehicle.

8. A step apparatus (10) for a vehicle according to claim 7, wherein
a length of the downwardly-extend portion (45b, 51b) of the foreign object-proof portion (45,51) is arranged not to interfere with the step (14), and
the foreign object-proof portion (45,51, 11b) is secured to the vehicle floor (3).

9. A step apparatus (10) for a vehicle according to claim 8, wherein
a seal member (44) is provided between the raised portion (42c) of the step (14) and the foreign object-proof portion (45, 51, 11b), the seal member (44) closely contacts the step (14) and the foreign object-proof portion (45) when the step (14) is located at the protruded position.

10. A step apparatus (10) for a vehicle according to claim 1, wherein
the drive mechanism (20) is provided at a position being lower than the step (14) in the main body (11),
the step (14) includes a step panel (41) and a step cover portion (42) covering a surface of the step panel (41) and provided with a raised portion (42c), and
the raised portion (42c) is provided with a fixing portion (43) for fixing the step panel (41) and the step cover portion (42) with each other.

11. A step apparatus (10) for a vehicle according to claim 1, wherein
the main body (11), the drive mechanism (20) and the step (14) are disposed beneath the vehicle floor (3), and
when the step (14) is located at the retracted position in the main body (11), the slide door (2) moved to close the entrance (1a) of the vehicle body (1) closes an opening (11a) of the main body (11) through which the step (14) is moved between the protruded position and the retracted position.

12. A step apparatus (10) for a vehicle according to claim 1, wherein
the step apparatus (10) including the main body (11), the drive mechanism (20) and the step (14) is provided at an area being outside of the vehicle body (1) and being lower than a rocker rail (4) provided at a lower end of the vehicle body (1), and
when the step (14) is located at the retracted position in the main body (1x), the slide door (2) moved to close the entrance (1a) of the vehicle body (1) closes an opening (11a) of the main body (11) through which the step (14) is moved between the protruded position and the retracted position.
